(19) Europäisches Patentamt

European Patent Office

Office européen des brevets

(11) **EP 1 382 797 B1**

(12) **EUROPÄISCHE PATENTSCHRIFT**

| | |
|---|---|
| (45) Veröffentlichungstag und Bekanntmachung des Hinweises auf die Patenterteilung:<br>**24.05.2006   Patentblatt 2006/21** | (51) Int Cl.:<br>***F01D 5/14*** *(2006.01)* |

(21) Anmeldenummer: **03003683.4**

(22) Anmeldetag: **18.02.2003**

(54) **Strömungs-Arbeits-Maschine mit überhöhtem Rotor-Stator-Kontraktionsverhältnis**

Fluid machine flow path with increased stage contraction ratios

Passage d'une machine à écoulement avec étages à contraction augmentée

(84) Benannte Vertragsstaaten:
**DE ES FR GB IT SE**

(30) Priorität: **20.07.2002   DE 10233033**

(43) Veröffentlichungstag der Anmeldung:
**21.01.2004   Patentblatt 2004/04**

(60) Teilanmeldung:
**05022399.9 / 1 637 697**

(73) Patentinhaber: **Rolls-Royce Deutschland Ltd & Co KG**
**15827 Dahlewitz (DE)**

(72) Erfinder: **Gümmer, Volker, Dr.-Ing.**
**15831 Mahlow (DE)**

(74) Vertreter: **Weber, Joachim**
**Hoefer & Partner**
**Patentanwälte**
**Gabriel-Max-Strasse 29**
**81545 München (DE)**

(56) Entgegenhaltungen:
**EP-A- 0 982 475         DE-C- 338 916**
**US-A- 3 129 876         US-A- 3 775 023**
**US-A- 4 778 338**

EP 1 382 797 B1

**Beschreibung**

Die Erfindung bezieht sich auf eine Strömungs-Arbeits-Maschine gemäß dem Oberbegriff des Hauptanspruchs bzw. des nebengeordneten Anspruchs.

Im Einzelnen bezieht sich die Erfindung auf eine Strömungs-Arbeits-Maschine mit zumindest einem mit Schaufeln versehenen Rotor und zumindest einem mit Schaufeln versehenen Stator, wobei der Rotor mittels einer rotierenden Welle in einem Gehäuse gelagert ist.

Die aerodynamische Belastung von Strömungs-Arbeits-Maschinen, wie etwa Bläsern, Verdichtern, Pumpen und Ventilatoren, die sowohl mit gasförmigem als auch mit flüssigem Medium betrieben werden können, ist durch das Wachstum und die Ablösung von Grenzschichten auf den Schaufeln sowie auf den Naben- und Gehäusewänden bestimmt. Üblicherweise erhält man ein gutes Betriebsverhalten, wenn die aerodynamische Belastung gleichmäßig auf die Rotorbeschaufelung und die Statorbeschaufelung verteilt wird, beispielsweise bei einer Bläser- oder Verdichterstufe. Dabei fällt auch die Ringkanalkontraktion, d. h. die Abnahme der Ringkanalquerschnittsfläche in Strömungsrichtung, die bei kompressiblem Arbeitsmedium zwischen der Eintritts- und der Austrittsebene einer Stufe erforderlich ist, am Rotor und Stator sehr ähnlich aus. Dabei ergeben sich leichte Unterschiede der Kontraktion am Rotor und am Stator je nach gewähltem Reaktionsgrad dieser Stufe.

Der Stand der Technik zeigt Konstruktionen, bei welchen sich die innere und die äußere Ringkanalkontur, beispielsweise von Bläsern und Verdichtern, kontinuierlich annähern und dabei einen konischen Verlauf ohne Unebenheiten aufweisen.

Demgemäss lassen sich die aus dem Stand der Technik bekannten Ringkanäle in zwei Kategorien unterteilen, zum einen in Ringkanäle mit kontinuierlich konischem Verlauf und zum anderen in Ringkanäle mit konischem Verlauf, aber gleich bleibender Fläche in den Axialspalten zwischen den Schaufeln, wobei dabei keine Kontraktion auftritt. Der letztgenannte Stand der Technik ergibt sich beispielsweise aus der US 6,312,221 B1.

Der Erfindung liegt die Aufgabe zu Grunde, eine Strömungs-Arbeits-Maschine der eingangs genannten Art zu schaffen, welche bei einfachem Aufbau und betriebssicherer Wirkungsweise eine aerodynamische Entlastung des Rotors aufweist.

Erfindungsgemäß wird die Aufgabe durch die Merkmale des Hauptanspruchs gelöst, die Unteransprüche zeigen weitere vorteilhafte Ausgestaltungen der Erfindung.

Erfindungsgemäß ist somit zum einen ein Ringkanalverlauf vorgesehen, dessen Flächenquerschnitt in mindestens einer einen Rotor und einen Stator umfassenden Stufe zu einem Rotor-Stator-Kontraktionsverhältnis QRS führen, welches folgender Gleichung genügt:

$$[0{,}2 + (KT - 0{,}45)^{0{,}1}] < QRS < 3{,}0$$

wobei KT die Gesamtstufenkontraktion ist. QRS und KT wurden wie folgt berechnet:

$$QRS = KR \, / \, KS \; \text{mit} \; KR = ARI \, / \, ARA$$

und KS = ASI / ASA
KT = ARI / ASA
wobei ARI, ARA, ASI und ASA sich wie folgt berechnen:

$$ARI = \pi \, (R_2{}^2 - R_1{}^2)$$

$$ARA = \pi \, (R_4{}^2 - R_3{}^2)$$

$$ASI = \pi \, (R_6{}^2 - R_5{}^2)$$

$$ASA = \pi \, (R_8{}^2 - R_7{}^2)$$

wobei in Durchströmungsrichtung der Strömungs-Arbeits-Maschine

$R_1$    der Radius am stromauf gelegenen Fußpunkt der Rotorschaufel an der Rotorwelle,

$R_2$    der Radius am stromauf gelegenen radial äußeren Punkt der Rotorschaufel,

$R_3$    der Radius am stromab gelegenen Fußpunkt der Rotorschaufel an der Rotorwelle,

$R_4$    der Radius am stromab gelegenen radial äußeren Punkt der Rotorschaufel,

$R_5$    der Radius am stromauf gelegenen radial inneren Punkt der Statorschaufel,

$R_6$    der Radius am stromab gelegenen radial äußeren Punkt der Statorschaufel,

$R_7$    der Radius am stromab gelegenen radial inneren Punkt der Statorschaufel sind.

$R_8$    der Radius am stromab gelegenen radial äußeren Punkt der Statorschaufel, und

In einer vorteilhaften Ausgestaltung der Erfindung ist ein Ringkanalverlauf vorgesehen, dessen Flächenquerschnitte zu einer Axialspaltkontraktion KX1 und KX2 führen, die folgenden Gleichungen genügen:

$$0{,}8 < KX1 < 1{,}0$$

$$0{,}8 < KX2 < 1{,}0$$

wobei KX1 und KX2 folgenden Gleichungen genügen:

$$KX1 = ARA \;/\; ASI$$

$$KX2 = ASA \;/\; ARI2$$

wobei sich ARA, ASI, ASA und ARI2 wie folgt berechnen:

$$ARA = \pi \, (R_4{}^2 - R_3{}^2)$$

$$ASI = \pi \, (R_6{}^2 - R_5{}^2)$$

$$ASA = \pi \, (R_8{}^2 - R_7{}^2)$$

$$ARI2 = \pi \, (R_{10}{}^2 - R_9{}^2)$$

wobei in Strömungsrichtung der Strömungs-Arbeits-Maschine

$R_3$      der Radius am stromab gelegenen Fußpunkt der Rotorschaufel an der Rotorwelle,

$R_4$      der Radius am stromab gelegenen radial äußeren Punkt der Rotorschaufel,

$R_5$      der Radius am stromauf gelegenen radial inneren Punkt der Statorschaufel,

$R_6$      der Radius am stromab gelegenen radial äußeren Punkt der Statorschaufel,

$R_7$      der Radius am stromab gelegenen radial inneren Punkt der Statorschaufel,

$R_8$      der Radius am stromab gelegenen radial äußeren Punkt der Statorschaufel,

$R_9$      der Radius am stromauf gelegenen radial inneren Punkt der Schaufel der stromab nächsten Rotorschaufel sind.

$R_{10}$      der Radius am stromauf gelegenen radial äußeren Punkt der Schaufel der stromab nächsten Rotorschaufel, und

Die vorliegende Erfindung zeichnet sich durch eine Reihe erheblicher Vorteile aus.

Erfindungsgemäß bezieht sich die Erfindung auf eine Strömungs-Arbeits-Maschine sowohl für gasförmiges als auch für flüssiges Arbeitsmedium in axialer oder halbaxialer Bauart.

Die erfindungsgemäße Lösung ist sowohl bei Strömungs-Arbeits-Maschinen mit nur einer Stufe (Rotor und Stator) als auch mit mehreren Stufen einsetzbar.

Es versteht sich, dass, wie auch aus dem Stand der Technik bekannt, der Rotor aus einer Anzahl von Schaufeln aufgebaut ist, die mit der rotierenden Welle der Strömungs-Arbeits-Maschine verbunden sind und die an das Arbeitsmedium abgeben. Demgemäss besteht der Stator aus einer Anzahl feststehender Schaufeln, die entweder an beiden Enden mit Deckband oder nabenseitig mit freiem Schaufelende ausgeführt sein können. Sowohl der Rotor als auch der Stator sind in einem Gehäuse angeordnet.

Weiterhin kann die Strömungs-Arbeits-Maschine in der erfindungsgemäßen Ausgestaltung vor dem ersten Rotor einen Stator aufweisen (Vorleitrad). Die Statoren können hinsichtlich ihrer Schaufeln drehbar ausgebildet sein, so dass diese von außerhalb des Gehäuses, beispielsweise mittels einer Spindel, einstellbar sind.

Bei der erfindungsgemäßen Lösungsmöglichkeit, die sich auf das Kontraktionsverhältnis QRS zwischen Rotor und Stator bezieht, ist es besonders günstig, wenn die Strömungs-Arbeits-Maschine, welche beispielsweise als Turbomaschine ausgebildet sein kann, Statoren mit spezieller Hochauftriebskonfiguration und entsprechend hoher aerodynamischer Belastbarkeit umfasst. Es ist dann von großem Vorteil, wenn die einzelnen Stufen dieser Strömungs-Arbeits-Maschine mit einem Ringkanalquerschnittsverlauf versehen werden, der eine signifikante Erhöhung der Statorbelastung bei gleich bleibender Rotorbelastung erlaubt. In diesem Fall ist es sinnvoll, abweichend vom Stand der Technik, eine sichtliche Überhöhung des Rotor-Stator-Kontraktionsverhältnisses einer Stufe vorzusehen. Betrachtet man eine Stufe einer mehrstufigen Strömungs-Arbeits-Maschine (Turbomaschine), so ist die Kontraktion am Rotor der Stufe vergleichsweise hoch, die am Stator der selben Stufe sehr viel geringer. Dieser Umstand lässt sich durch das erfindungsgemäß angegebene Kontraktionsverhältnis QRS zwischen Rotor und Stator quantifizieren.

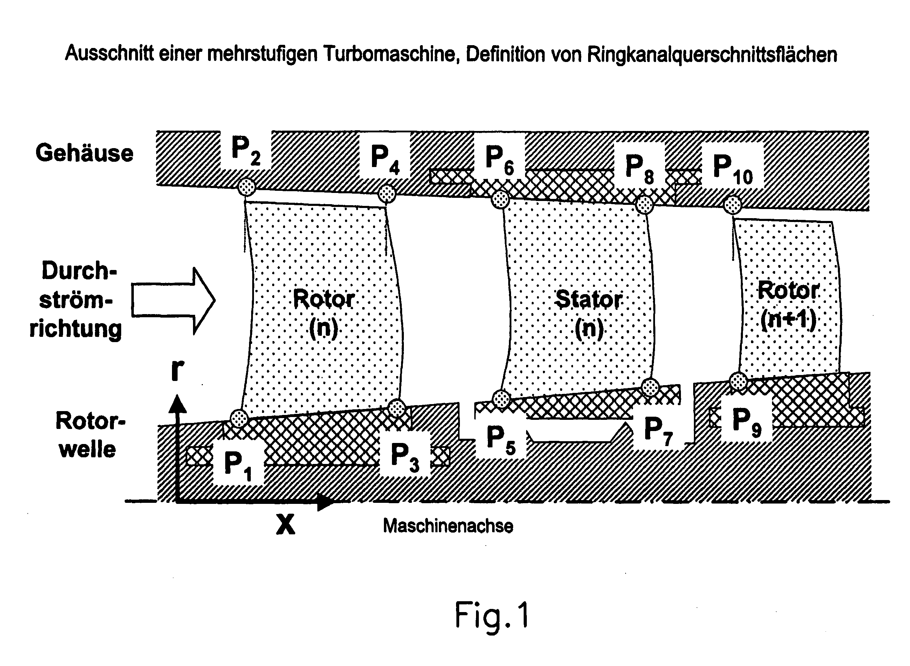

Zur Verdeutlichung der Erfindung zeigt die Fig. 1 einen Ausschnitt einer mehrstufigen Turbomaschine mit der Definition der Ringkanalquerschnittsflächen.

In Fig. 1 ist die n-te Stufe einer mehrstufigen Maschine gezeigt. Die vier Eckpunkte des Rotors (n) und des Stators (n) sowie die vorderen Eckpunkte des Folgerotors (n+1) sind besonders markiert. Die Eckpunkte werden durch die Schnittpunkte der Vorder- und Hinterkanten (bzw. deren radialer Verlängerung bei Rotor- oder Statorschaufelenden mit Ringspalt) und dem Gehäuse bzw. der Nabe festgelegt. Verläuft die Naben- oder Gehäusekontur in Umfangsrichtung nicht bei konstantem Radius, so kommt der in Umfangsrichtung arithmetisch gemittelte Radius zum Tragen. Der Rotor (n) besitzt die Punkte P1 bis P4, der Stator (n) die Punkte P5 bis P8 und der Rotor (n+1) die Punkte P9 bis P10. Jeder Punkt P(i) hat die axiale Position X(i) und den Radius R(i). Das Koordinatenbezugssystem liegt auf der Maschinenachse.

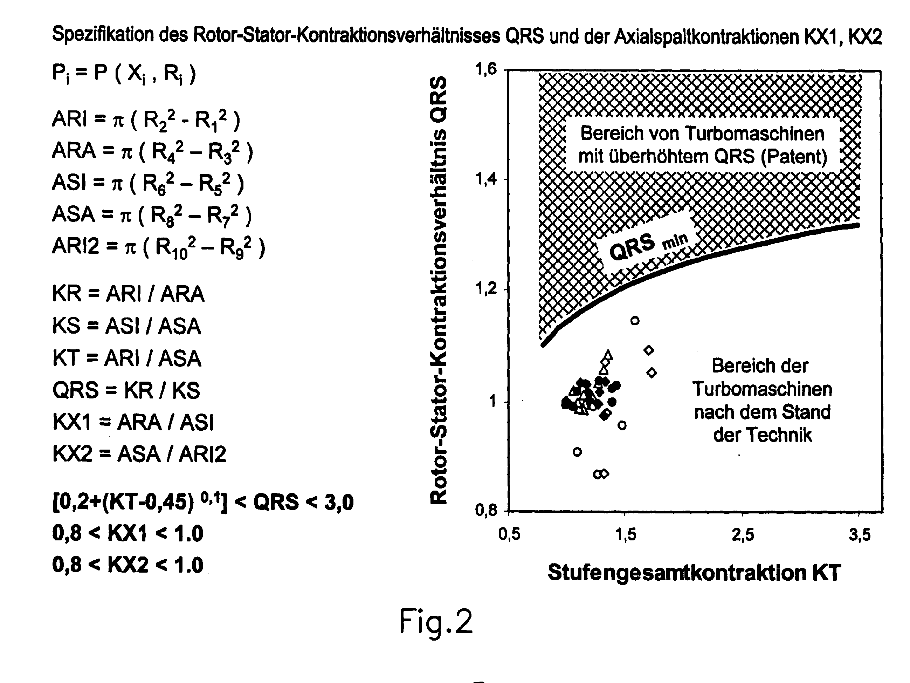

Die Fig. 2 zeigt die Formeln zur Berechnung der fünf Ringkanalquerschnittsflächen ARI, ARA, ASI, ASA und ARI2, welche sich aus den Radien berechnen lassen. Die Rotorkontraktion ergibt sich dann aus KR = ARI / ARA, während die Statorkontraktion sich aus KS = ASI / ASA berechnet.

Das Kontraktionsverhältnis zwischen Rotor und Stator ist dann QRS = KR / KS.

Weiterhin ist die Gesamtstufenkontraktion KT = ARI / ASA von Bedeutung.

Die vorliegende Erfindung bezieht sich auf einen Bereich überhöhter Werte von QRS in Abhängigkeit von KT nach folgender Rechenregel:

$$[0,2 + (KT - 0,45)^{01}] < QRS < 3,0$$

Der Zusammenhang gemäß oben stehender Formel ist in der rechten Hälfte der Fig. 2 grafisch dargestellt. Dabei ist ersichtlich, dass die aus dem Stand der Technik bekannten Strömungs-Arbeits-Maschinen sich deutlich unterhalb der Kennlinie befinden.

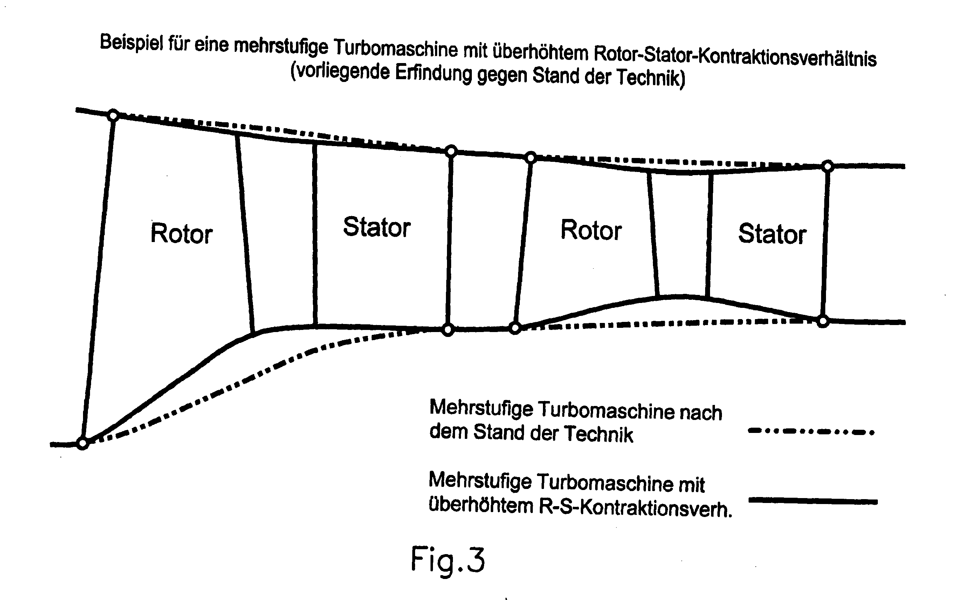

Die Fig. 3 zeigt einen beispielhaften Verlauf eines Ringkanals gemäß der vorliegenden Erfindung, verglichen mit einem nach dem Stand der Technik ausgeführten Ringkanal. Ausgehend von dieser aus dem Stand der Technik bekannten Ringkanalkonfiguration kann erfindungsgemäß das QRS-Kriterium durch alleinige Formgebung der Nabenkontur der Rotorwelle, durch alleinige Formgebung der Gehäusekontur oder durch eine Kombination von Formgebungen der Naben- und der Gehäusekontur erfüllt werden.

Es versteht sich, dass die Fig. 3 nur eine sehr vereinfachte Darstellung wählt. Es ist auch möglich, die Rotoreintritts-und Rotoraustrittspunkte ebenfalls zu verändern.

Bei der oben beschriebenen vorteilhaften Ausführung der erfindungsgemäßen Lösung ist auf die Ausdehnung des üblicherweise auf Rotor-und Statorreihen begrenzten statischen Druckaufbaus auf die Axialspalte zwischen den einzelnen Schaufelreihen abgestellt. Dieser Umstand lässt sich ebenfalls mit Hilfe der Ringkanalquerschnittsflächen an den Ein- und Austrittsebenen der Rotoren und Statoren quantitativ beschreiben. Hierzu wird nochmals auf die Fig. 1 Bezug genommen.

Wie in Fig. 2 dargestellt, lassen sich mit den gegebenen Ringkanalquerschnittsflächen ARA, ASI, ASA und ARI2 die Kontraktion $KX1 = ARA / ASI$ zwischen Rotor und Stator sowie die Kontraktion $KX2 = ASA / ARI2$ zwischen Stator und Folgerotor berechnen. Es ist somit ein Bereich von Werten von KX unter 1,0 vorgesehen. Hierbei gelten die folgenden Regeln:

$$0,8 < KX1 < 1,0 \text{ und}$$

und

$$0,8 < KX2 < 1,0.$$

Die aus dem Stand der Technik bekannten Werte liegen stets über 1,0 bzw. haben einen Wert von 1,0.

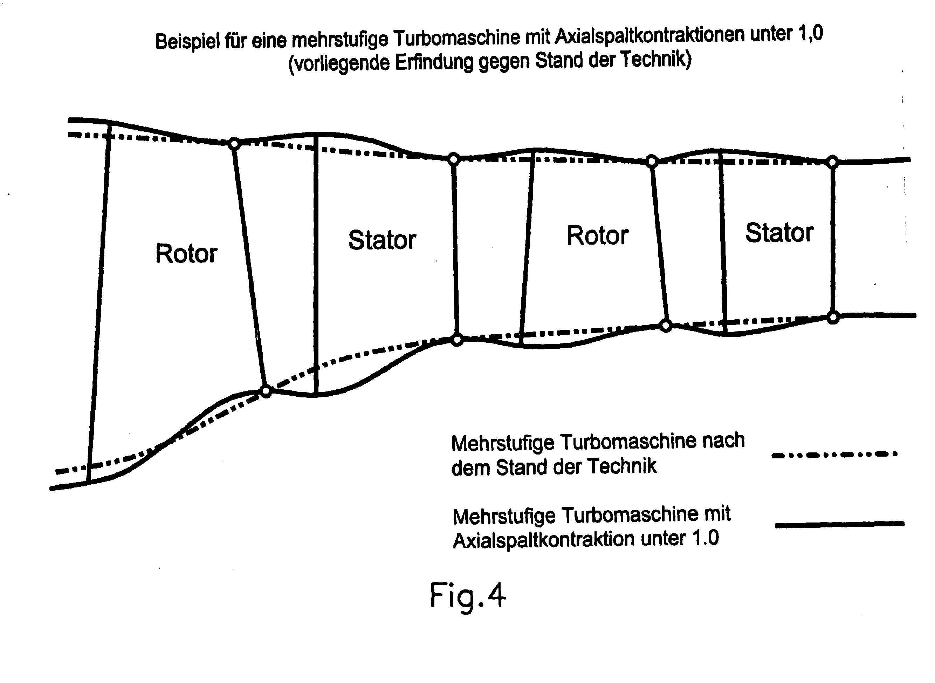

Die Fig. 4 zeigt ein vorteilhaftes Ausführungsbeispiel des Verlaufs eines Ringkanals. Ausgehend von einer gegebenen Ringkanalkonfiguration (Stand der Technik) kann das KX-Kriterium durch alleinige Formgebung der Nabenkontur, durch alleinige Formgebung der Gehäusekontur oder durch eine Kombination der Formgebungen von Naben- und Gehäusekontur erfüllt werden.

Auch bei der Darstellung der Fig. 4 wurde aus Gründen der Klarheit darauf verzichtet, dass die Rotor- und Statoraustrittspunkte ebenfalls verändert werden können.

Aus dem Vergleich mit dem Stand der Technik ergibt sich, dass die aus dem Stand der Technik bekannten Ringkanäle nicht die Verwendung stark unterschiedlicher Kontraktionen (Flächenverhältnisse) in Rotor und Stator umfassen. Die erfindungsgemäße Lösung ist somit besonders dann von großem Vorteil, wenn unterschiedliche Entwurfsmethodiken für Rotoren und Statoren verwendet werden. Dies kann beispielsweise der Einsatz konventionell hergebrachter Techniken am Rotor und der Einsatz von neuen Hochauftriebskonfigurationen am Stator sein. Sämtliche Bläser- und Verdichterentwürfe des Standes der Technik zeigen sehr klar umrissene Unterschiede bezüglich der prozentualen Abnahme der Ringkanalflächen in Strömungsrichtung über Rotor und Stator einer Stufe. Der Stand der Technik zeigt auch nicht eine teilweise Verlagerung der Diffusion von den Schaufelreihen in die Axialspalte. Dies bedeutet, es wird beim Stand der Technik von einer abnehmenden oder gleich bleibenden Ringkanalquerschnittsfläche in Strömungsrichtung ausgegangen.

Erfindungsgemäß ist es somit besonders vorteilhaft, dass der Einsatz eines erhöhten Rotor-Stator-Kontraktionsverhältnisses die Voraussetzung für einen Entwurf einer Strömungs-Arbeits-Maschine oder einer Turbomaschine schafft, der den Hybrideinsatz einer sich üblich fortentwickelnden Rotortechnologie und einer neuartigen Technik für Statoren in Hochauftriebskonfigurationen beinhaltet. Der erfindungsgemäße Lösungsansatz ist somit völlig neuartig und anders als aus dem Stand der Technik bekannt und schafft eine abgegrenzte Kategorie neuer Strömungs-Arbeits-Maschinen bzw. Turbomaschinen.

Für ein gegebenes Druckverhältnis einer Turbomaschine lässt sich unter Beibehaltung oder Verbesserung des Wirkungsgrades (bis zu 2 % abhängig von der Wirkungsweise der erwähnten Spezialstatoren) die Anzahl der verbauten Teile um etwa 40 % senken. Die Kosten sinken dabei um etwa 20 %.

Bei Einsatz des Konzeptes im Verdichter eines Flugtriebwerkes mit rund 25.000 Pfund Schub ergibt sich so eine Reduzierung des spezifischen Kraftstoffverbrauchs von bis zu 1 %.

Darüber hinaus bietet der zusätzliche Einsatz von Axialspaltkontraktionen unter 1,0 eine Möglichkeit, die üblicherweise ungenützten Axialspalten als aktive Elemente in den Prozess des statischen Druckaufbaus in der Strömungs-Arbeits-Maschine (Turbomaschine) einzubinden, und eine gegebene axiale Baulänge effektiver zu nutzen. Auch dieser Ansatz ist hinsichtlich seines Gesamtkonzeptes völlig neuartig und durch den Stand der Technik in keiner Weise angedacht. Für ein gegebenes Druckverhältnis der Strömungs-Arbeits-Maschine (Turbomaschine) lässt sich der Wirkungsgrad um etwa 0,5 % weiter erhöhen, die Anzahl der verbauten Schaufeln kann um 5 % weiter verringert werden. Die Kosten sinken um etwa 2 % weiter. Bei Einsatz des Konzeptes im Verdichter eines Flugtriebwerks mit rund 25.000 Pfund Schub ergibt sich so eine weitere Reduzierung des spezifischen Kraftstoffverbrauchs um etwa 0,25 %.

**Patentansprüche**

1. Strömungs-Arbeits-Maschine mit zumindest einem mit Schaufeln versehenen Rotor und zumindest einem mit Schaufeln versehenen Stator, wobei der Rotor mittels einer rotierenden Welle in einem Gehäuse gelagert ist, **dadurch gekennzeichnet, dass** ein Ringkanalverlauf vorgesehen ist, dessen Flächenquerschnitt in mindestens einer einen Rotor und einen Stator umfassenden Stufe zu einem Rotor-Stator-Kontraktionsverhältnis QRS führen, welches folgender Gleichung genügt:

$$[0,2 + (KT - 0,45)^{0,1}] < QRS < 3,0$$

wobei QRS nach folgender Formel definiert ist:

$$QRS = KR / KS$$

wobei KT die Gesamtstufenkontraktion ist. QRS und KT sind wie folgt zu bestimmen:

$$QRS = KR / KS \text{ mit } KR = ARI / ARA$$

und KS = ASI / ASA
KT = ARI / ASA
wobei ARI, ARA, ASI und ASA sich wie folgt berechnen:

$$ARI = \pi (R_2{}^2 - R_1{}^2)$$

$$ARA = \pi (R_4{}^2 - R_3{}^2)$$

$$ASI = \pi (R_6{}^2 - R_5{}^2)$$

$$ASA = \pi (R_8{}^2 - R_7{}^2)$$

wobei in Durchströmungsrichtung der Strömungs-Arbeits-Maschine

$R_1$ der Radius am stromauf gelegenen Fußpunkt der Rotorschaufel an der Rotorwelle,
$R_2$ der Radius am stromauf gelegenen radial äußeren Punkt der Rotorschaufel,
$R_3$ der Radius am stromab gelegenen Fußpunkt der Rotorschaufel an der Rotorwelle,
$R_4$ der Radius am stromab gelegenen radial äußeren Punkt der Rotorschaufel,
$R_6$ der Radius am stromab gelegenen radial äußeren Punkt der Statörschaufel,
$R_5$ der Radius am stromauf gelegenen radial inneren Punkt der Statorschaufel,
$R_8$ der Radius am stromab gelegenen radial äußeren Punkt der Statorschaufel, und
$R_7$ der Radius am stromab gelegenen radial inneren Punkt der Statorschaufel sind.

**2.** Strömungs-Arbeits-Maschine nach Anspruch 1, **dadurch gekennzeichnet, dass** ein Ringkanalverlauf vorgesehen ist, dessen Flächenquerschnitte zu einer Axialspaltkonzentration KX1 und KX2 führen, die folgenden Gleichungen genügen:

$$0,8 < KX1 < 1,0$$

$$0,8 < KX2 < 1,0$$

wobei KX1 und KX2 folgenden Gleichungen genügen:

$$KX1 = ARA / ASI$$

$$KX2 = ASA / ARI2$$

wobei sich ARA, ASI, ASA und ARI2 wie folgt berechnen:

$$ARA = \pi \ (R_4{}^2 - R_3{}^2)$$

$$ASI = \pi \ (R_6{}^2 - R_5{}^2)$$

$$ASA = \pi \ (R_9{}^2 - R_7{}^2)$$

$$ARI2 = \pi \ (R_{10}{}^2 - R_9{}^2)$$

wobei in Strömungsrichtung der Strömungs-Arbeits-Maschine

$R_3$ der Radius am stromab gelegenen Fußpunkt der Rotorschaufel an der Rotorwelle,
$R_4$ der Radius am stromab gelegenen radial äußeren Punkt der Rotorschaufel,
$R_6$ der Radius am stromab gelegenen radial äußeren Punkt der Statorschaufel,
$R_5$ der Radius am stromauf gelegenen radial inneren Punkt der Statorschaufel,
$R_8$ der Radius am stromab gelegenen radial äußeren Punkt der Statorschaufel,
$R_7$ der Radius am stromab gelegenen radial inneren Punkt der Statorschaufel,

$R_{10}$ der Radius am stromauf gelegenen radial äußeren Punkt der Schaufel der stromab nächsten Rotorschaufel, und

$R_9$ der Radius am stromauf gelegenen radial inneren Punkt der Schaufel der stromab nächsten Rotorschaufel sind.

3. Strömungs-Arbeits-Maschine nach einem der Ansprüche 1 oder 2, **dadurch gekennzeichnet, dass** die Werte von QRS und/oder KX1 bzw. KX2 durch Formgebung der Kontur der Nabe bzw. der Rotorwelle erhalten werden.

4. Strömungs-Arbeits-Maschine nach einem der Ansprüche 1 oder 2, **dadurch gekennzeichnet, dass** die Werte von QRS und/oder KX1 bzw. KX2 durch Formgebung der Kontur des Gehäuses erhalten werden.

5. Strömungs-Arbeits-Maschine nach einem der Ansprüche 1 oder 2, **dadurch gekennzeichnet, dass** die Werte von QRS und/oder KX1 bzw. KX2 durch eine Kombination auf Formgebung der Kontur der Nabe bzw. der Rotorwelle und der Kontur des Gehäuses erhalten werden.

6. Strömungs-Arbeits-Maschine nach einem der Ansprüche 1 bis 5, **gekennzeichnet durch** eine einen Rotor und einen Stator umfassende Stufe.

7. Strömungs-Arbeits-Maschine nach einem der Ansprüche 1 bis 5, **gekennzeichnet durch** mehrere, jeweils einen Rotor und einen Stator umfassende Stufen.

**Claims**

1. Fluid machine with at least one rotor equipped with blades and with at least one stator equipped with vanes, with the rotor being supported in a casing by means of a rotating shaft, **characterized in that** a form of annulus is provided whose cross-sectional area in at least one stage consisting of a rotor and a stator results in a rotor-stator contraction ratio QRS which satisfies the following equation:

$$[0.2 + (KT - 0.45)^{0.1}] < QRS < 3.0$$

where QRS is defined by the following formula

$$QRS = KR / KS$$

with KT being the total-stage contraction. QRS and KT are to be determined as follows:

$$QRS = KR / KS \text{ with } KR = ARI / ARA$$
$$\text{and } KS = ASI / ASA$$
$$KT = ARI / ASA$$

with ARI, ARA, ASI and ASA being calculated as follows:

$$ARI = \pi (R_2{}^2 - R_1{}^2)$$

$$ARA = \pi \, (R_4{}^2 - R_3{}^2)$$

$$ASI = \pi \, (R_6{}^2 - R_5{}^2)$$

$$ASA = \pi \, (R_8{}^2 - R_7{}^2)$$

where in the direction of flow of the fluid machine

$R_1$ is the radius at the upstream base point of the rotor blade on the rotor shaft,
$R_2$ is the radius at the upstream radial outer point of the rotor blade,
$R_3$ is the radius at the downstream base point of the rotor blade on the rotor shaft,
$R_4$ is the radius at the downstream radial outer point of the rotor blade,
$R_5$ is the radius at the upstream radial inner point of the stator vane,
$R_6$ is the radius at the downstream radial outer point of the stator vane,
$R_7$ is the radius at the downstream radial inner point of the stator vane, and
$R_8$ is the radius at the downstream radial outer point of the stator vane.

2. Fluid machine in accordance with Claim 1 **characterized in that** a form of annulus is provided whose cross-sectional areas result in axial-gap contractions KX1 and KX2 which satisfy the following equations:

$$0.8 < KX1 < 1.0$$

$$0.8 < KX2 < 1.0$$

where KX1 and KX2 satisfy the following equations:

$$KX1 = ARA \, / \, ASI$$

$$KX2 = ASA \, / \, ARI2$$

with ARA, ASI, ASA and ARI2 being calculated as follows:

$$ARA = \pi \, (R_4{}^2 - R_3{}^2)$$

$$ASI = \pi \, (R_6{}^2 - R_5{}^2)$$

$$ASA = \pi \, (R_9{}^2 - R_7{}^2)$$

$$ARI2 = \pi\,(R_{10}^2 - R_9^2)$$

where, in the direction of flow of the fluid machine,

$R_3$ is the radius at the downstream base point of the rotor blade on the rotor shaft,
$R_4$ is the radius at the downstream radial outer point of the rotor blade,
$R_5$ is the radius at the upstream radial inner point of the stator vane,
$R_6$ is the radius at the downstream radial outer point of the stator vane,
$R_7$ is the radius at the downstream radial inner point of the stator vane,
$R_8$ is the radius at the downstream radial outer point of the stator vane,
$R_9$ is the radius at the upstream radial inner point of the downstream next rotor blade, and
$R_{10}$ is the radius at the upstream radial outer point of the downstream next rotor blade.

3. Fluid machine in accordance with one of the Claims 1 or 2, **characterized in that** the values of QRS and/or KX1 or KX2, respectively, are obtained by shaping the contour of the hub or the rotor shaft, respectively.

4. Fluid machine in accordance with one of the Claims 1 or 2, **characterized in that** the values of QRS and/or KX1 or KX2, respectively, are obtained by shaping the contour of the casing.

5. Fluid machine in accordance with one of the Claims 1 or 2, **characterized in that** the values of QRS and/or KX1 or KX2, respectively, are obtained by a combination of the shaping of the contour of the hub or the rotor shaft, respectively, and the contour of the casing.

6. Fluid machine in accordance with one of the Claims 1 to 5, **characterized by** a stage comprising a rotor and a stator.

7. Fluid machine in accordance with one of the Claims 1 to 5, **characterized by** multiple stages, each comprising a rotor and a stator.


**Revendications**

1. Machine à écoulement avec au moins un rotor muni d'aubes et au moins un stator muni d'aubes, le rotor étant logé dans un carter au moyen d'un arbre tournant, **caractérisée en ce qu'**un tracé de canal annulaire est prévu, dont la surface de la section transversale dans au moins un étage comprenant un rotor et un stator entraîne un rapport de contraction rotor-stator QRS satisfaisant à l'équation :

$$[0{,}2 + (KT - 0{,}45)^{0{,}1}] < QRS < 3{,}0$$

sachant que QRS est défini selon la formule suivante :

$$QRS = KR\,/\,KS$$

KT étant la contraction globale de l'étage. QRS et KT sont à déterminer comme suit:

$$QRS = KR / KS \text{ avec } KR = ARI / ARA$$

$$et \ KS = ASI / ASA$$

$$KT = ARI / ASA$$

sachant que ARI, ARA, ASI et ASA se calculent comme suit:

$$ARI = \pi \ (R_2^2 - R_1^2)$$

$$ARA = \pi \ (R_4^2 - R_3^2)$$

$$ASI = \pi \ (R_6^2 - R_5^2)$$

$$ASA = \pi \ (R_8^2 - R_7^2)$$

et que dans le sens d'écoulement de la machine à écoulement

$R_1$ est le rayon à la base amont de l'aube de rotor sur l'arbre de rotor,
$R_2$ est le rayon au point extérieur amont de l'aube de rotor dans le sens radial,
$R_3$ est le rayon à la base aval de l'aube de rotor sur l'arbre de rotor,
$R_4$ est le rayon au point extérieur aval de l'aube de rotor dans le sens radial,
$R_5$ est le rayon au point intérieur amont de l'aube de stator dans le sens radial,
$R_6$ est le rayon au point extérieur aval de l'aube de stator dans le sens radial,
$R_7$ est le rayon au point intérieur aval de l'aube de stator dans le sens radial, et
$R_8$ est le rayon au point extérieur aval de l'aube de stator dans le sens radial.

2. Machine à écoulement selon la revendication nº 1, **caractérisée en ce qu'**un tracé de canal annulaire est prévu, dont les surfaces des sections transversales entraînent des contractions de fente axiale KX1 et KX2 satisfaisant à l'équation:

$$0,8 < KX1 < 1,0$$

$$0,8 < KX2 < 1,0$$

sachant que KX1 et KX2 satisfont aux équations suivantes:

$$KX1 = ARA / ASI$$

$$KX2 = ASA / ARI2$$

et que ARA, ASI, ASA et ARI2 se calculentcomme suit:

$$ARA = \pi (R_4^2 - R_3^2)$$

$$ASI = \pi (R_6^2 - R_5^2)$$

$$ASA = \pi (R_9^2 - R_7^2)$$

$$ARI2 = \pi (R_{10}^2 - R_9^2)$$

et que dans le sens d'écoulement de la machine à écoulement

$R_3$ est le rayon à la base aval de l'aube de rotor sur l'arbre de rotor,
$R_4$ est le rayon au point extérieur aval de l'aube de rotor dans le sens radial,
$R_5$ est le rayon au point intérieur amont de l'aube de stator dans le sens radial,
$R_6$ est le rayon au point extérieur aval de l'aube de stator dans le sens radial,
$R_7$ est le rayon au point intérieur aval de l'aube de stator dans le sens radial,
$R_8$ est le rayon au point extérieur aval de l'aube de stator dans le sens radial,
$R_9$ est le rayon au point intérieur amont dans le sens radial de l'aube de rotor suivante en aval, et
$R_{10}$ est le rayon au point extérieur amont dans le sens radial de l'aube de rotor suivante en aval.

**3.** Machine à écoulement selon une des revendications 1 ou 2, **caractérisée en ce que** les valeurs de QRS et/ou KX1 et KX2 sont obtenues par la forme du contour du moyeu et/ou de l'arbre du rotor.

**4.** Machine à écoulement selon une des revendications 1 ou 2, **caractérisée en ce que** les valeurs de QRS et/ou KX1 et KX2 sont obtenues par la forme du contour du carter.

**5.** Machine à écoulement selon une des revendications 1 ou 2, **caractérisée en ce que** les valeurs de QRS et/ou KX1 et KX2 sont obtenues par une combinaison de la forme du contour du moyeu et/ou de l'arbre du rotor et du contour du carter.

**6.** Machine à écoulement selon une des revendications 1 à 5, **caractérisée par** un étage comprenant un rotor et un stator.

**7.** Machine à écoulement selon une des revendications 1 à 5, **caractérisée par** plusieurs étages comprenant chacun un rotor et un stator.

Ausschnitt einer mehrstufigen Turbomaschine, Definition von Ringkanalquerschnittsflächen

Fig. 1

EP 1 382 797 B1

Spezifikation des Rotor-Stator-Kontraktionsverhältnisses QRS und der Axialspaltkontraktionen KX1, KX2

$P_i = P(X_i, R_i)$

$ARI = \pi(R_2^2 - R_1^2)$
$ARA = \pi(R_4^2 - R_3^2)$
$ASI = \pi(R_6^2 - R_5^2)$
$ASA = \pi(R_8^2 - R_7^2)$
$ARI2 = \pi(R_{10}^2 - R_9^2)$

$KR = ARI / ARA$
$KS = ASI / ASA$
$KT = ARI / ASA$
$QRS = KR / KS$
$KX1 = ARA / ASI$
$KX2 = ASA / ARI2$

$[0,2 + (KT - 0,45)^{0,1}] < QRS < 3,0$
$0,8 < KX1 < 1.0$
$0,8 < KX2 < 1.0$

**Fig.2**

Beispiel für eine mehrstufige Turbomaschine mit überhöhtem Rotor-Stator-Kontraktionsverhältnis
(vorliegende Erfindung gegen Stand der Technik)

Rotor  Stator  Rotor  Stator

Mehrstufige Turbomaschine nach
dem Stand der Technik

Mehrstufige Turbomaschine mit
überhöhtem R-S-Kontraktionsverh.

Fig.3

EP 1 382 797 B1

Beispiel für eine mehrstufige Turbomaschine mit Axialspaltkontraktionen unter 1,0 (vorliegende Erfindung gegen Stand der Technik)

Rotor

Stator

Rotor

Stator

Mehrstufige Turbomaschine nach dem Stand der Technik

Mehrstufige Turbomaschine mit Axialspaltkontraktion unter 1.0

Fig. 4